# EUROPÄISCHE PATENTSCHRIFT

(11) **EP 3 071 511 B1**
(45) Veröffentlichungstag und Bekanntmachung des Hinweises auf die Patenterteilung: **20.12.2017**
(21) Anmeldenummer: 14827708.0
(22) Anmeldetag: 18.11.2014
(51) Int. Cl.: B66F 9/075, B66F 9/18, B65G 1/10, B65G 1/137, B65G 1/04, B66F 9/06

(54) **VORRICHTUNG ZUR WEITGEHEND MASCHINELLEN ZUSAMMENSTELLUNG VON WARENLIEFERUNGEN IN LAGERHALLEN**
DEVICE FOR ORDER PICKING IN WAREHOUSES LARGELY BY MACHINE
DISPOSITIF D'ASSEMBLAGE DANS UNE LARGE MESURE AUTOMATISÉE DE LIVRAISONS DE MARCHANDISES DANS DES ENTREPÔTS

(30) Priorität: 18.11.2013 DE 102013019368
(43) Veröffentlichungstag der Anmeldung: 28.09.2016
(73) Patentinhaber: Grenzebach Maschinenbau GmbH, 86663 Asbach-Baeumenheim (DE)
(72) Erfinder: GEIGER, Rüdiger, 86682 Genderkingen (DE); BAIER, Gunar, 68219 Mannheim (DE)
(74) Vertreter: Kindermann, Peter
(86) Internationale Anmeldenummer: PCT/DE2014/000591
(87) Internationale Veröffentlichungsnummer: WO 2015/070841

(56) Entgegenhaltungen:
- EP-A2- 0 304 942
- WO-A2-2007/149194
- DE-T2- 68 928 565
- US-A1- 2007 063 500
- US-A1- 2011 093 134

## Beschreibung

Die vorliegende Erfindung betrifft ein Verfahren und eine Vorrichtung zur weitgehend maschinellen Zusammenstellung von Warenlieferungen in Lagerhallen.

Im Zeitalter der Digitalisierung der menschlichen Kultur hat diese Entwicklung auch den Bereich der Verteilung von Waren in Warenhäusern erfasst.
Vorstufen der Warenhäuser waren die überdachten Einkaufspassagen des frühen 19. Jahrhunderts, in denen nach orientalischem Vorbild hunderte von Einzelhändlern gemeinsam ihre Waren ausstellten, beispielsweise 1825 der Grand bazar in Paris. Das Warenhaus war die erste jener modernen Großvertriebsformen des Einzelhandels, die die Rolle des kleinen Kaufmanns durch ihre übermächtige Konkurrenz bedrängten.
Diese Entwicklung führte in dieser Zeit zu Verkaufs - Strukturen die ihr weit gefächertes Warenangebot via Internet anbieten und weltweit versenden.

Zur Zusammenstellung einer Lieferung an einen bestimmten Kunden müssen hieraus Pakete mit unterschiedlicher Bestückung oder Gebinden zusammengestellt werden. Das Herbeischaffen einzelner Bestandteile einer solchen Lieferung kann hierbei händisch erfolgen oder mittels automatisch geführter Fahrzeuge. Solche so genannten AGV's (automatic guided vehicles) können mobile Roboter oder speziell für den jeweiligen Verwendungszweck konstruierte Fahrzeuge sein die mit einem speziellen Führungs - und Steuerungsverfahren von einem Ort zu einem anderen Ort bewegt werden.
Herkömmliche automatisch geführte Fahrzeuge, mit denen zum Beispiel Materialien in Fabriken und Lagerhäusern bewegt werden, weisen eine minimale Punkt - zu Punkt - Bewegungssteuerung auf. Die meisten solcher Systeme verwenden AGV's, die einer festen Leitspur folgen. Im Allgemeinen handelt es sich hierbei um einen Hochfrequenz - Sendeantennendraht, der im Fabrikboden versenkt angeordnet ist, einen auf den Boden aufgemalten reflektierenden Streifen, oder ein auf den Boden aufgeklebtes reflektierendes Band. Solche Leitspuren sind jedoch ersichtlich sehr verletzlich und unzuverlässig.

Alle diese Bewegungssteuerungen begrenzen die Bewegungsfreiheit der einzelnen AGV's, indem diese gezwungen werden einem physikalisch festgelegten Weg zu folgen.

Die meisten solcher Systeme verlassen sich auf die fahrzeugeigene Annäherungs-Detektion um Kollisionen mit anderen Fahrzeugen, unbewegten Objekten oder menschlichem Personal zu vermeiden. In solchen Systemen können sich die AGV's nur in einer Richtung längs der von ihnen verfolgten Spur bewegen.

Diese Systeme erreichen eine Punkt-zu-Punkt-Bewegung durch Implementieren von Steuerschemata und Verwenden frei beweglicher AGV's mit programmierbaren bidirektionalen Wegen. Hierdurch wird erreicht, dass sich mehrere AGV's ohne Kollisionen oder übermäßige Staus gleichzeitig auf denselben Wegen befinden. Diese Verfahren maximieren den Freiheitsgrad der AGV - Bewegung. Das Steuerschema implementiert hierbei ein Schema der "statischen" Kollisionsvermeidung für AGV-Systeme. Im Wesentlichen wird dabei ein Computerprogramm verwendet zum Untersuchen der jeweiligen Umgebung eines AGV's, um nur solche Wege zu ermitteln die für AGV's befahrbar sind. Ein weiteres Zuteilungsprogramm zieht hieraus die erforderlichen Daten, um AGV's im jeweiligen System von einem Punkt zu einem anderen Punkt zu bewegen, ohne dass zwei AGV's gleichzeitig denselben Weg befahren.

Die Nachteile dieser Verfahren aus dem Stand der Technik bestehen darin, dass sie entweder auf geschlossene Pfade, eine unidirektionale Bewegung, auf das Fehlen der externen Steuerung der AGV - Bewegung oder auf die "statische" Kollisionsvermeidung beschränkt sind.

Zur Vermeidung dieser Nachteile ist aus der DE 689 28 565 T2 nach den Angaben im Patentanspruch 1 ein Verfahren zum Leiten von mehreren automatisch gelenkten Fahrzeugen (AGV) längs eines Netzes miteinander verbundener Wege bekannt, die bei Knotenpunkten beginnen, enden und Knotenpunkte enthalten.

Bei diesem Verfahren wird eine Aufzeichnung einer von den bestimmten AGV<'>s zu verfolgenden Route in Form von, bei einem Knotenpunkt beginnenden und beim nächsten Knotenpunkt endenden, Wegabschnitten erstellt.

Mit solchen automatisch geführten Fahrzeugen lassen sich zwar einzelne Bestandteile einer solchen Lieferung herbeischaffen, das Zusammenstellen der speziellen Bestandteile zu einer Lieferung musste bisher jedoch ausschließlich händisch erfolgen.

Aus der den Oberbegriff des Patentanspruchs 1 bildenden Druckschrift EP 0 304 942 A2 ist eine Vorrichtung zur weitgehend maschinellen Zusammenstellung von Warensendungen in Lagerhallen mittels selbstständig frei beweglichen Transportfahrzeugen, mit den folgenden Merkmalen bekannt: einem Fahrzeuggehäuse mit einer Trägerplatte zum Aufnehmen und Transportieren eines Lastregals mit Transportgut, mit zwei, beidseitig in der Mitte des Fahrzeuggehäuses an jeweils einer gesondert gelagerten Drehachse separat angetriebenen Antriebsrädern, wobei an der Vorderseite und an der Hinterseite des Fahrzeuggehäuses jeweils mindestens ein Stützrad vorgesehen ist, und wobei die Trägerplatte ein Lastregal mit einem Leichtroboter mit Mitteln zum Ergreifen von Waren trägt, und mindestens einem 3D-Scanner sowie mindestens einer WLAN-Antenne im vorderen Bereich des Fahrzeuggehäuses.

Weiterhin ist aus der Druckschrift US 2011/093134 A1 eine Vorrichtung und ein Verfahren zur Vermeidung von Kollisionen von autonomen Transportfahrzeugen bekannt, wobei Positionsmarkierungen von optischen Sensoren aufgenommen und ausgewertet werden, um Zusammenstöße von unterschiedlichen Transportfahrzeugen zu verhindern.

Es ist die Aufgabe der vorliegenden Erfindung ein autonomes Transportfahrzeug zu schaffen mit dem der schnelle Transport von Lastregalen in großen Werkhallen störungsfrei auch bei unebenem Boden und bei leichten Steigungen ausgeführt werden kann und mit denen die Zusammenstellung einer Lieferung weitgehend maschinell erfolgen kann.

Diese Aufgabe wird durch die Vorrichtung nach Patentanspruch 1 gelöst.

In den weiteren Unteransprüchen sind weitere vorteilhafte Ausgestaltungen der Erfindung gekennzeichnet.

Die erfindungsgemäße Vorrichtung wird im Folgenden näher beschrieben. Es zeigen im Einzelnen:
Fig. 1: eine Übersicht über Waren als Transportgut
Fig. 2: eine beispielhafte Vorrichtung zur Bewegung von Transportgut
Fig. 3: eine räumliche Darstellung der Kinematik eines Transportfahrzeugs
Fig. 4: die Befüllung von Behältern mit Kommissionswaren
Fig.5: eine Darstellung der Zusammenstellung von Warenlieferungen
Fig.6: alternative Zusammenstellung von Warenlieferungen

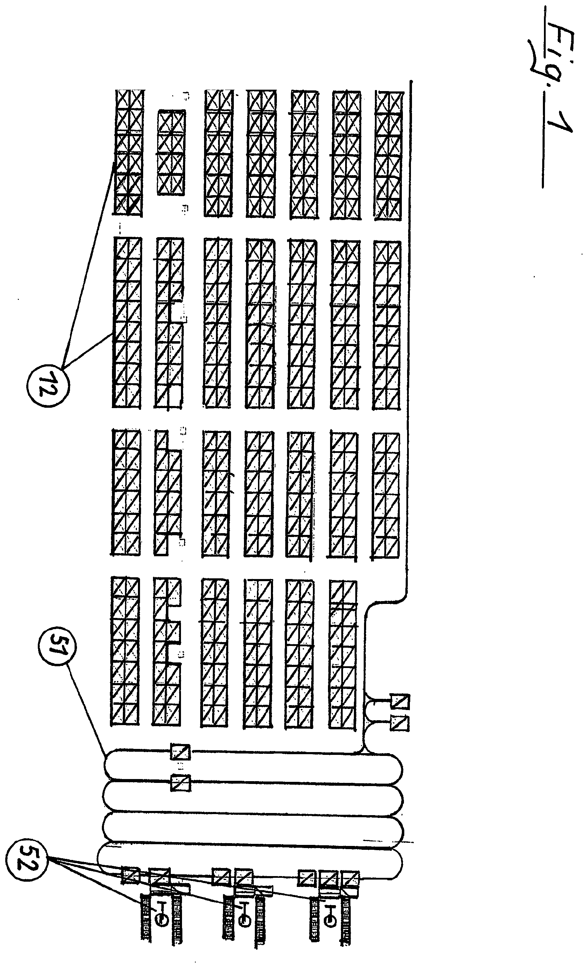

Die Fig. 1 zeigt eine Übersicht über eine Lagerhalle mit Kommissionierplätzen. Hier ist beispielhaft eine Lagerhalle mit einer in Reihen angeordneten Ansammlung von Lastregalen 12 dargestellt. Auf der rechten Seite der Fig.1 sind drei Kommissionierplätze 52 mit Verpackungsstationen von oben zu erkennen. Mit 51 sind Warteschleifen von Fahrzeugen bezeichnet.

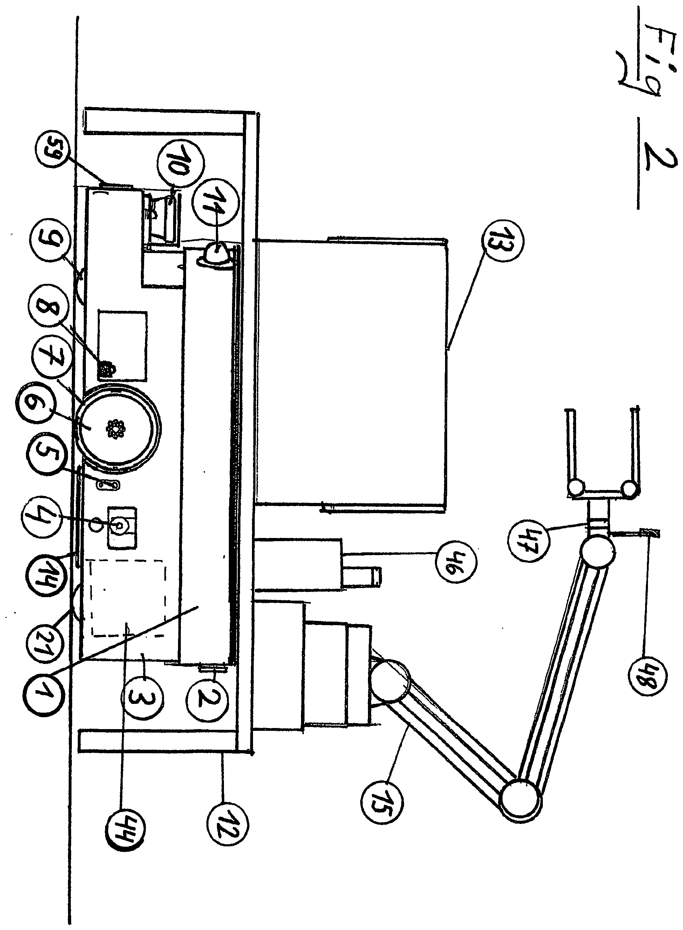

Die Fig. 2: zeigt die Bewegung von Waren als Transportgut. Hier ist beispielhaft ein Lastregal 12 gezeigt, das lediglich ein Transportgut 13 mit Leichtroboter 15 trägt. In der Praxis weisen die Lastregale 12 mehrere Fächer mit jeweils einer Mehrzahl gleichartiger oder verschiedener Transportgüter auf. Weiter ist in der Fig. 2 ein Transportfahrzeug in der Seitenansicht dargestellt das dieses Lastregal 12 mit dem darauf befestigten Leichtroboter 15 auf einer Trägerplatte 1 vom Boden mittels eines Hubmechanismus abgehoben hat. Dieser Hubmechanismus wird später erläutert. Das, das Transportfahrzeug umgebende Gehäuse 3 weist in dieser Ansicht ein, von der Seite gezeigtes, Anzeige - Display 2 auf. Dieses Anzeige - Display 2 kann Auskunft geben über die Art und die Zusammensetzung der auf dem Lastregal befindlichen Beladung, sowie über den Lageplatz von dem das Ladegut geholt wurde, als auch über den Zielort zu dem es befördert werden wird. Weiter kann im Anzeige - Display 2 auch der Ladezustand der das Transportfahrzeug antreibenden Batterien oder Energiespeicher angezeigt werden.
Um von außen auf die Bedienung des Transportfahrzeugs händisch Zugriff zu haben, ist das gezeigte Bedienelement 4 eingebaut. Beispielsweise kann hier ein Nothalt des Transportfahrzeugs vorgesehen sein. Es können im Rahmen dieses Bedienelements 4 jedoch auch mehrere, eine Gruppe von Bedienelementen bildende Steuerungsmöglichkeiten für Eingriffe händischer Art, vorgesehen sein.

In der gezeigten Ansicht ist ferner in Fahrtrichtung ein Antriebsrad 6 gezeigt, dem auf der anderen gegenüberliegenden Seite ein weiteres Antriebsrad 6 entspricht. Die Vorderseite des Transportfahrzeugs, befindet sich auf der linken Seite der Fig. 2. Neben dem Antriebsrad 6 ist in dieser Ansicht rechts ein Lagepunkt dargestellt der die Lage einer Drehachse 5 kennzeichnet. Um die Drehachse 5 kann das Antriebsrad 6 mittels eines, in dieser Ansicht vom Gehäuse verdeckten, Winkelhebels verschwenkt werden. Auf diese Weise ist gewährleistet, dass bei einer, durch Bodenunebenheiten verursachten, Querneigung des Transportfahrzeugs das Antriebsrad 6 den Kontakt mit der Lauffläche des Bodens beibehält. Der Belag des Antriebsrads 6 ist mit 7 bezeichnet und so ausgestaltet, dass er maximale Reibung auf der Lauffläche des jeweils vorhandenen Bodens gewährleistet.Die neben dem Antriebsrad 6 gezeigte Steckverbindung 8 ermöglicht die Aufladung der, das Antriebssystem des Transportfahrzeugs antreibenden, Energiespeicher. Das können elektrische Batterien, Flüssiggas - Speicher oder andere Energiespeicher sein.

Zur Abstützung des Transportfahrzeugs dienen Stützräder, von denen in dieser Darstellung das vordere mit 9 und das hintere mit 21 bezeichnet sind.

An der Vorderseite des Transportfahrzeugs ist ein handelsüblicher 3D - Scanner 10 installiert um Gefahren von Kollisionen, insbesondere unachtsame Personen, frühzeitig zu erkennen und einer Kollision mit diesen vorbeugen zu können.

Eine WLAN - Antenne 11 dient der Kommunikation mit einer, das Transportfahrzeug steuernden, Zentral - Leitstelle.Das Transportgut 13 stellt hier ein mögliches Behältnis dar das von dem Leichtroboter 15 befüllt werden kann.

Mit 14 ist ein induktives Aufnahmeelement für elektrische Energie bezeichnet. Her kann nicht nur während der Fahrt elektrische Energie von den im Transportfahrtzeug angeordneten Energie - Speichern aufgenommen werden, es lassen sich über die hierbei im Boden installierten Leitungen auch zusätzlich oder ergänzend Steuerungsbefehle übermitteln. Anstelle von, im Boden fest verlegten, induktiv wirksamen Leitungen können von einem Transportfahrzeug auch diesbezüglich bestimmte feste Stationen angefahren werden. Es können auch mobile induktiv wirksame Energieübertrager, in Form von am Boden liegenden Matten oder Platten zur Energieübertragung, zum Einsatz kommen.

An der Vorderseite des Transportfahrzeugs ist ferner ein Lichtfeldsensor 59 angebracht.
Hinsichtlich des verwendeten Lichtfeldsensors 59, wird auf die neue Entwicklung der so genannten Minilinsen verwiesen, die in der Form von hunderten von Minilinsen nach dem Lichtfeldprinzip optische Informationen sammeln, die dann später zu Bildern mit einer gewünschten Auflösung und / oder einem gewünschten Blickwinkel datentechnisch zusammengestellt werden können. Solche Minilinsen sind 3 - D-fähig, billig herzustellen und folgen dem Prinzip eines insektenauges.
Im Verbund mit dem 3D - Scanner 10 ist es dem Transportfahrzeug leichter möglich zwischen der Ansammlung an Lastregalen 12 zu navigieren und unerwartet auftauchenden Hindernissen adäquat zu begegnen.
Mit 44 ist ein Stellraum für Energiespeicher bezeichnet. Als Energiespeicher sind sowohl Speicher für elektrische Energie als auch Speicher für chemisch gespeicherte Energie verwendbar.
Auf dem in der Fig.2 gezeigten Lastregal 12 befindet sich ferner ein Greifermagazin 46. In diesem Greifermagazin 46 sind in einer definierten Anordnung verschiedene Arten von Greifer - Werkzeugen angeordnet auf die der Leichtroboter Zugriff nehmen kann. Der Wechsel solcher Greifer - Werkzeuge kann von dem Leichtroboter 15 mittels einer Schnellspann - Kupplung 47 automatisch erfolgen. In dem in der Fig.2 gezeigten Bereich befindet sich zu diesem Zweck und vor allem zur Unterstützung des Zugriffs auf ergreifende Waren ein weiterer Lichtfeldsensor 48.

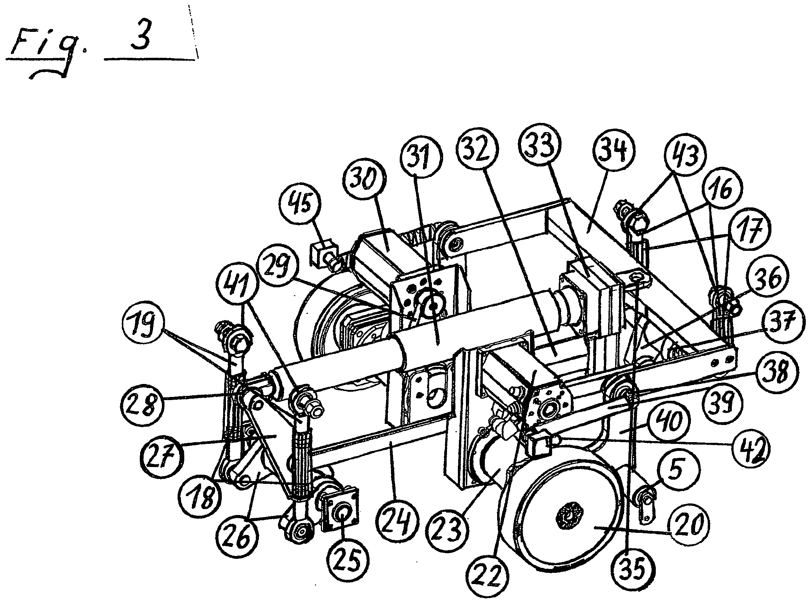

Die Fig. 3 zeigt eine räumliche Darstellung der Kinematik eines Transportfahrzeugs. Diese Abbildung zeigt das Transportfahrzeug ohne das umhüllende Gehäuse 3. Auf Verbindungen zu dem Gehäuse 3 wird an entsprechender Stelle hingewiesen. Zuerst wird die Kinematik der Antriebsräder erläutert.

Im Vordergrund sind das, aus der Fig. 2 bekannte, linksseitige Antriebsrad, hier mit 20 bezeichnet, und die Drehachse 5 am Gehäuse zu erkennen. Das Achslager 23 für das linksseitige Antriebsrad 20 und das der darüber liegende Servomotor 22 sind mittels eines, nicht näher bezeichneten und nur von hinten zu sehendem, Winkelblech zu einer Funktionseinheit verbunden. In diesem Winkelblech läuft ein Zahnriemen über den der Servomotor 22 die Rotationsachse des linksseitigen Antriebsrads 20 antreibt. Auf der gegenüberliegenden Seite ist der entsprechende Servomotor 30 für den rechtsseitigen Antrieb zu erkennen. Auf dieser Seite ist das entsprechende Winkelblech von der Rückseite zu sehen. Hier ist der in diesem Winkelblech laufende entsprechende Zahnriemen 29 zu erkennen. Die gesamte Funktionseinheit, bestehend aus dem Antriebsrad 20 mit dem Achslager 23, dem Servomotor 22 und dem Winkelblech mit seinem Zahnriemen, ist über einen Winkelhebel 40 um die Drehachse 5 schwenkbar. Der Winkelhebel 40 ist über ein Gelenk 38 an einem U - förmigen Querlenker 34 befestigt, an dessen anderem Ende das rechtsseitige Antriebsrad entsprechend befestigt ist. An dem Gelenk 38 ist weiter ein Federelement 39 gelagert, dessen anderer Lagerungspunkt am Gehäuse befestigt ist. Auf der in der Fig.3 sichtbaren linken Seite des Transportfahrzeugs ist dieser Anlenkpunkt als klötzchenförmige, kaum erkennbare, Lagerung gezeigt. Dagegen ist auf der gegenüberlegenden Seite dieser Punkt als Anlenkpunkt 45 des rechten Federelements bezeichnet. Das Federelement 39 dient dem Zweck, über den Winkelhebel 40 das Antriebsrad 20 auf die Bodenfläche zu drücken und somit den Bodenkontakt des jeweiligen Antriebsrads 20 zu verbessern. Entsprechendes gilt für das gegenüber liegende rechte Antriebsrad. In diesem Bereich ist auch ein Sensor 42 zur Erfassung der Drehbewegung des linksseitigen Antriebsrads 20 zu erkennen. Auf diese Weise kann in Abhängigkeit von der Geschwindigkeit des Transportfahrzeugs der Schlupf an diesem Antriebsrad ermittelt werden. Entsprechendes gilt für das rechtsseitige Antriebsrad. Die somit ermittelten zusätzlichen Informationen können zur Steuerung des Transportfahrzeugs und für die Verbesserung der Lagestabilität des Transportfahrzeugs verwendet werden.

Eine weitere kinematische Einrichtung wird im Folgenden zum Anheben eines Lastregals 12 erläutert.
Um ein Lastregal aufnehmen zu können ist es erforderlich, dass das Transportfahrzeug nach dem Darunterfahren unter das Lastregal dieses anhebt und seinen Bodenkontakt löst um es transportieren zu können.
Diesem Zweck dienen in direktem Kontakt die vorderen Hubstangen 19 und die hinteren Hubstangen 16.
Angehoben und abgesenkt werden die Hubstangen 19 und 16 mittels eines Stellelements 31, das mittels einer Gewindespindel über einen ein - und ausfahrbaren Zylinder über einen Gelenkkopf 28 und einen angelenkten Hubdreh - Hebel 27 die hierfür notwendigen Kräfte aufbringt.

Aus der Fig.3 ist linksseitig deutlich zu erkennen wie der Hubdreh - Hebel 27 im Zusammenwirken mit jeweils einem vorderen Hubstangenhebel 26 mittels entsprechender Drehbewegungen um eine Drehachse 25 am Gehäuse die notwendigen Lageveränderungen der beiden vorderen Hubstangen 19 bewirkt.

Die vorderen Hubstangen 19 tragen jeweils die entsprechende vordere Trägerplatten - Aufhängung 41.

Gleichzeitig ist diesem Bereich der Fig.3 zu entnehmen, dass an dem Hubdreh - Hebel 27 eine Schubstange 24 angelenkt ist, die die Bewegungen des Hubdreh - Hebels 27 über einen Achshebel 36 auf den hinteren Hubstangenhebel 37 überträgt. Die Bewegungen des hinteren Hubstangenhebels 37 führt zu den notwendigen Lageveränderungen der beiden hinteren Hubstangen 16.

Die hinteren Hubstangen 16 tragen jeweils die entsprechende hintere Trägerplatten - Aufhängung 43.

Die Bewegung des Stellelements 31 erfolgt über einen Antrieb 32 und eine, die Kraft umleitende, Kraftübertragung 33. Die Kraftübertragung 33 ist mittels eines Gabelkopfs 35 am Querlenker 34 befestigt. Da der Gabelkopf 35 drehbar am Querlenker 34 gelagert ist, kann sich der Querlenker 34, als Verbindungselement zwischen den Winkelhebeln 40, bewegen und so wird ermöglicht, dass die beiden Antriebsräder voneinander unabhängige, vertikale Schwenkbewegungen ausführen können.

Die Stellelemente 18 für die vorderen Hubstangen 19 und die Stellelemente 17 für die hinteren Hubstangen 16 sind in der Fig.3 als geschwärzte Bereiche der entsprechenden Hubstangen gekennzeichnet. Mit ihnen lassen sich die jeweiligen Hubstangen einzeln und / oder im Verbund in ihrer Höhenlage verändern. Außerdem wird der Schwerpunkt eines Lastregals mittels, nicht näher bezeichneten, Sensoren erfasst. Das Ergebnis einer solchen Schwerpunkt - Ermittlung kann zur Steuerung der Stellelemente 18 und 17 für die Hubstangen 19 und 16 verwendet werden und somit notwendig erscheinende Korrekturen an der Lage des Schwerpunkts eines Transportfahrzeugs ermöglichen.

Insgesamt wird durch die aufgezeigte Anordnung der Hubstangen 19 und 16, die dazwischen liegende Hebelanordnung 36,24,26,27 und das Stellelement 31 in Zusammenwirkung mit dem Querlenker 34, sowie dessen Einwirken auf den Winkelhebel 40, erreicht, dass der Schwerpunkt der Last von dem Lastregal direkt im Bereich der Antriebsräder liegt.Die Stützräder und haben deshalb im Wesentlichen lediglich eine stabilisierende Funktion.

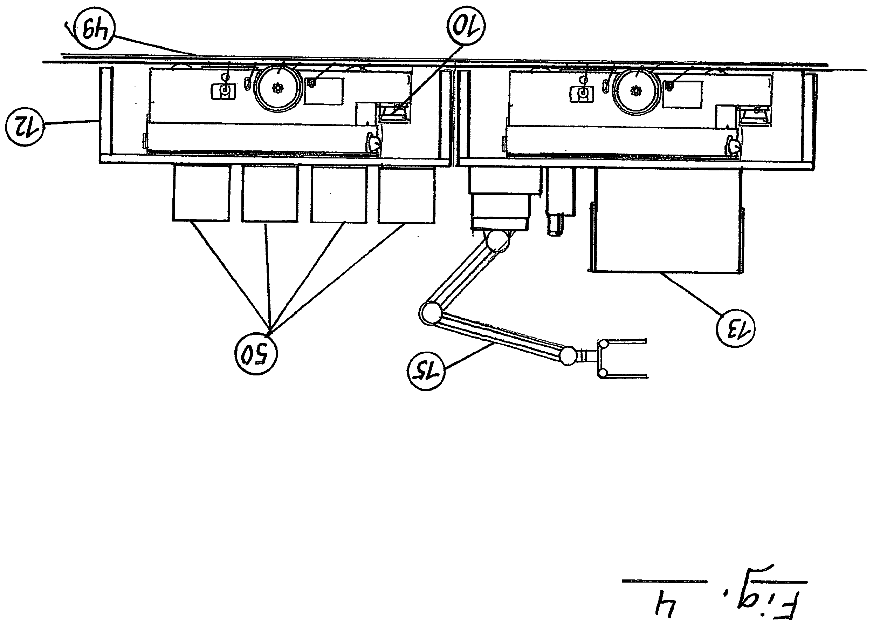

Die Fig. 4 zeigt die Befüllung von Behältern mit Kommissionswaren.
In dieser Darstellung sind zwei Transportfahrzeuge mit Lastregalen 12 gezeigt von denen das eine mit einem Leichtroboter 15 bestückt ist, wobei als Transportgut 13 ein größeres Behältnis von dem betreffenden Lastregal getragen wird. Hierbei kann das Transportgut 13 mittels des Leichtroboters 15 gerade beladen oder entladen werden. Daneben befindet sich ein Transportfahrzeug mit einem Lastregal 12 das mit mehreren kleineren Kommissionswaren - Behältern 50 bestückt ist. Im Boden ist beispielhaft eine Induktionsleitung 49 dargestellt. Bei diesem Transportfahrzeug ist der 3D - Scanner 10 bezeichnet um zu zeigen, dass beide Transportfahrzeuge mittels ihrer sensorischen Ausstattungen unabhängig voneinander navigieren können. Die Darstellung der Fig. 4 lässt auch die Interpretation zu, dass mittels des Leichtroboters 15 Kommissionsware aus dem Behälter des Transportguts 13 in die Kommissionsware - Behälter 50 verbracht wird.
In der Art der, in der Fig. 4 dargestellten, Begegnung sind in Lagerhallen nach der
Fig.1 eine Vielzahl von Transportfahrzeugen mit Leichtrobotern 15 neben einer Vielzahl von gewöhnlichen Transportfahrzeugen zur Erledigung ihrer Aufträge unterwegs. Neben der Kennzeichnung der verschiedenen Lastregale mittels Barcodes können zur Erleichterung der Erkennung der einzelnen Warengruppen durch die Leichtroboter 15 auch die Warengruppen mittels Barcodes gekennzeichnet sein.

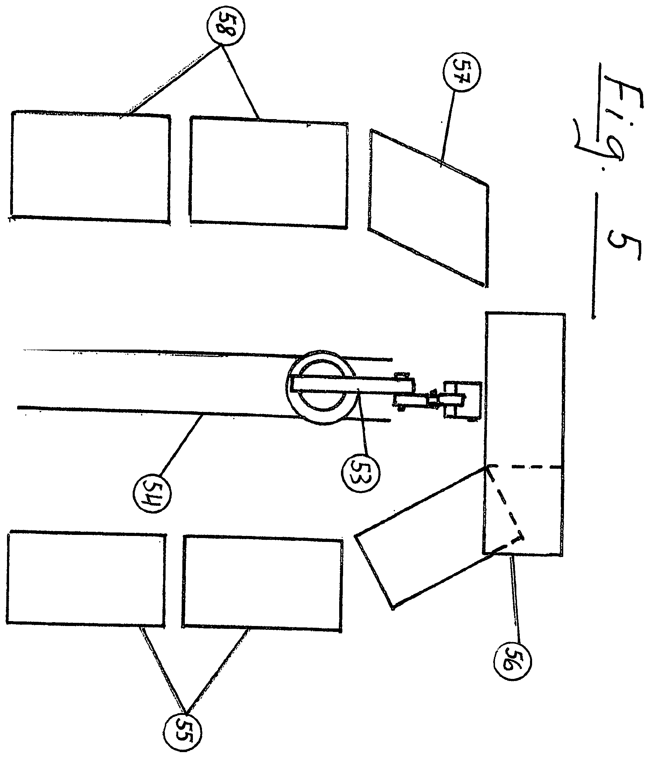

In der Fig.5 ist eine Darstellung der Zusammenstellung von Warenlieferungen gezeigt. Hier sind auf der linken Seite Lastregale 58 mit Kommissionsware zu sehen, wobei auf der rechten Seite zwei Lastregale 55 zur Aufnahme versandfertiger Ware dargestellt sind. Mit 53 ist ein 6 - Achs - Roter bezeichnet der sich im Wesentlichen auf einer Fahrbahn 54 bewegt. Eine Vorrichtung 57 im Arbeitsbereich des 6 - Achs - Roboters 53 dient der Verpackung der Waren. Hier können die Waren mit menschlicher Hilfe verpackt werden. Auf einem Sortierplatz 56 erfolgt die Zusammenstellung der Waren die zu einer bestimmten Lieferung gehören und die dann zu dem Lastregal 55 für versandfertige Ware transportiert werden.

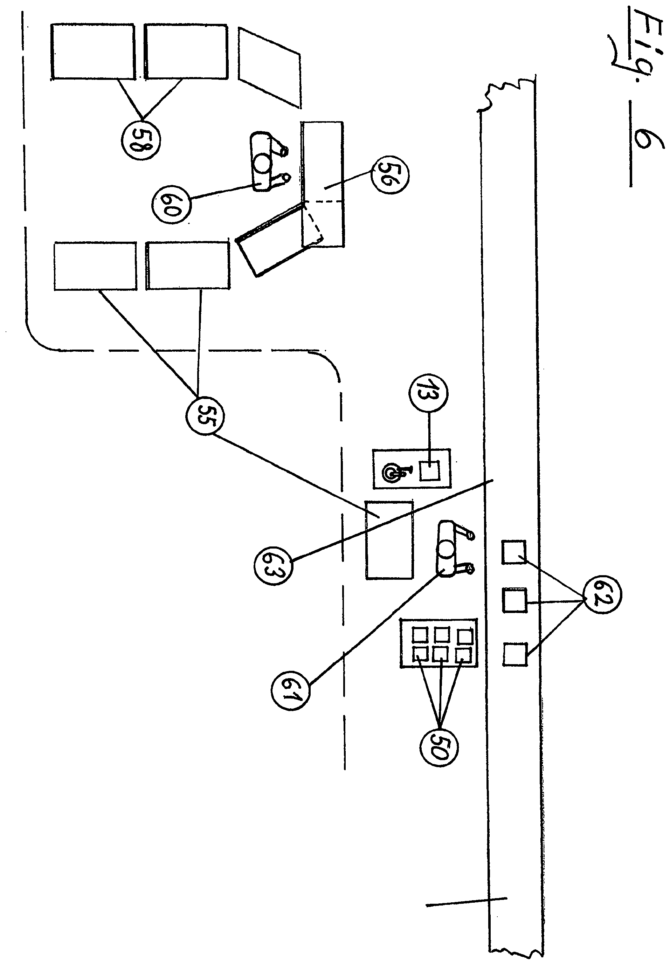

Fig.6 zeigt eine alternative Zusammenstellung von Warenlieferungen.
Im linken Teil der Fig.6 ist eine Kommissionier - Person 60 an einem Sortierplatz 56 dargestellt in deren Arbeitbereich einerseits Lastregale 58 mit Kommissionierware und andererseits Lastregale 55 für versandfertige Ware zu erkennen sind.
Im rechten Teil der Fig.6 ist eine Person 61 mit Arbeiten der Verpackung und dem Auflegen von verpackter Ware in der Form von Versandkartons 62 auf eine Transportvorrichtung 63, beispielsweise in der Form eines Fließbands,
dargestellt. Im Bereich der Person 61 ist ein Transportfahrzeug mit Transportgut 13 und ein Lastregal 55 für versandfertige Ware zu sehen. Die rechts neben der Person 61 gezeigten Behälter 50 für Kommissionswaren können beispielhaft von einem oder mehreren Transportfahrzeugen angeliefert sein.
Das gezeigte Transportfahrzeug kann einerseits Transportgut aus dem Warenlager liefern oder auch versandfertige Ware zum Beispiel von dem Sortierplatz 56 oder von dem Lastregal 55 im Bereich der Person 60 aufgeladen haben.
Es ist hierbei auch denkbar, dass der Person 60 durch die beschriebenen Transportfahrzeuge Waren aus dem Warenlager zugeführt werden, die von der Person 60 in transportierbare Behältnisse 55 sortiert werden. Die Behältnisse 55 werden dann durch Transportfahrzeuge oder manuell an verschiedene Personen 61 verbracht und von diesen entsprechend des zu erfüllenden Transportauftrages in Versandkartons 62 einsortiert. Hierbei werden die Versandkartons 62 durch die Transportvorrichtung 63 an den Personen 61 vorbeigeführt
Der Einsatzbereich der erfindungsgemäßen Transportfahrzeuge ist hier lediglich beispielhaft am Aufzeigen verschiedener Transportmöglichkeiten dargestellt.

Zur Steuerung der beschriebenen Transportfahrzeuge wird bevorzugt ein bekanntes Verfahren eingesetzt das von der Technischen Universität Berlin entwickelt wurde und am 10. Oktober 2007 veröffentlicht wurde unter:
Dynamic Routing of Automated Guided Vehicles in Real - time.
(Ewgenij Gawrilow, Ekkehard Köhler, Rolf H.Möhring, Björn Stenzel)
[http://www.math.tu-berlin.de/coga/publications/techreports/]

Es handelt sich hierbei im Wesentlichen um einen zweiteiligen Algorithmus, dessen erster Teil einen vorbereitenden Schritt umfasst und dessen zweiter Teil in Echtzeit eine Route berechnet und dabei für jeden Abschnitt ein bestimmtes Zeitfenster vorsieht

Die Anwendung des hier beschriebenen Verfahrens betraf ein AGV - Netzwerk im Container - Terminal Altenwerder im Hamburger Hafen. Die Anwendung desselben Verfahrens zum störungsfreien Betrieb von Automated Guided Vehicles in einem Warenhaus erscheint dagegen neu.

Die Steuerung der komplexen Bewegungsvorgänge und die Signalverarbeitung der verwendeten Sensoren erfordern ein spezielles Steuerungsprogramm.

### Bezugszeichenliste

- 1: Trägerplatte, Hubplatte
- 2: Anzeige - Display
- 3: Gehäuse, Fahrzeuggehäuse
- 4: Bedienelement, Nothalt
- 5: Drehachse
- 6: Antriebsrad
- 7: Belag eines Antriebsrads
- 8: Steckverbindung zur Aufladung von Energiespeichern
- 9: vorderes Stützrad
- 10: 3D - Scanner (Kollissionsschutz)
- 11: WLAN - Antenne (mobiler Hot - Spot)
- 12: Lastregal
- 13: Transportgut
- 14: induktives Aufnahme - Element für elektrische Energie
- 15: Leichtroboter
- 16: hintere Hubstange
- 17: Stellelement für eine hintere Hubstange
- 18: Stellelement für eine vordere Hubstange
- 19: vordere Hubstange
- 20: Antriebsrad, linksseitig
- 21: hinteres Stützrad
- 22: Servomotor für linksseitiges Antriebsrad
- 23: Achslager für das linksseitige Antriebsrad
- 24: Schubstange
- 25: Drehachse für einen vorderen Hubstangenhebel
- 26: vorderer Hubstangenhebel
- 27: Hubdreh - Hebel
- 28: Gelenkkopf
- 29: Zahnriemen für den rechtsseitigen Antrieb
- 30: Servomotor für den rechtsseitigen Antrieb
- 31: Stellelement, Gewindespindel
- 32: Antrieb für das Stellelement 31
- 33: Kraftübertragung vom Antrieb 32 zum Stellelement 31
- 34: Querlenker
- 35: Gabelkopf
- 36: Achshebel
- 37: hinterer Hubstangenhebel
- 38: Gelenk für einen Winkelhebel 40
- 39: Federelement
- 40: Winkelhebel
- 41: vordere Trägerplatten - Aufhängung
- 42: Sensor zur Erfassung der Drehbewegung des linkseitigen Antriebsrads
- 43: hintere Trägerplatten - Aufhängung
- 44: Stellraum für Energiespeicher
- 45: Anlenkpunkt des rechten Federelements am Gehäuse 3
- 46: Greifermagazin
- 47: Schnellspann - Kupplung des Greifers
- 48: Lichtfeldsensor
- 49: Induktionsleitung zur Energieübertragung
- 50: Behälter für Kommissionswaren
- 51: Warteschleifen
- 52: Kommissionierplatz mit einer Verpackungsstation
- 53: 6 - Achs - Roboter
- 54: Fahrbahn des Roboters 53
- 55: Lastregal für versandfertige Ware
- 56: Sortierplatz
- 57: Vorrichtung zum Verpacken der Waren
- 58: Lastregal mit Kommissionierware
- 59: Lichtfeldsensor am Transportfahrzeug
- 60: Kommissionier - Person
- 61: Versand - und Packperson
- 62: Versandkartons
- 63: Transporteinrichtung/Versand

## Patentansprüche

1. Vorrichtung zur weitgehend maschinellen Zusammenstellung von Warensendungen in Lagerhallen mittels selbstständig frei beweglichen Transportfahrzeugen, mit den folgenden Merkmalen:
a) einem Fahrzeuggehäuse (3) mit einer Trägerplatte (1) zum Aufnehmen und Transportieren eines Lastregals (12) mit Transportgut (13), mit zwei, beidseitig in der Mitte des Fahrzeuggehäuses (3) an jeweils einer gesondert gelagerten Drehachse (5) separat angetriebenen Antriebsrädern (6), wobei an der Vorderseite und an der Hinterseite des Fahrzeuggehäuses (9) jeweils mindestens ein Stützrad (9, 21) vorgesehen ist, und wobei die Trägerplatte (1) ein Lastregal (12) mit einem Leichtroboter (15) mit Mitteln zum Ergreifen von Waren trägt, und
b) mindestens einem 3D-Scanner (10) sowie mindestens einer WLAN-Antenne (11) im vorderen Bereich des Fahrzeuggehäuses (3),
**gekennzeichnet durch**
c) einen Querlenker (34), der die jeweils über einen Winkelhebel (40) um die Drehachse (5) schwenkbaren Antriebsräder (6) so verbindet, dass diese voneinander unabhängige vertikale Bewegungen ausführen können, und
d) ein zentral angeordnetes Stellelement (31), das über einen Hubreh-Hebel (27) und eine mit diesem verbundene Schubstange (24) zwei vordere Hubstangen (19) und zwei hintere Hubstangen (16) zum Anheben oder Absenken der Trägerplatte (1) bewegen kann, wobei
e) der Leichtroboter (15) im Bereich der Mittel zum Ergreifen von Waren einen Lichtfeldsensor (48) und das Fahrzeuggehäuse (3) im vorderen Bereich mindestens einen Lichtfeldsensor (5) aufweisen.

2. Vorrichtung nach Anspruch 1,
**dadurch gekennzeichnet,**
**dass** der Leichtroboter (15) mittels einer automatisch zu betätigen Schnellspann-Kupplung (47) aus einem Greifermagazin (46) das jeweils als geeignet ermittelte Greifer-Mittel entnimmt.

3. Vorrichtung nach einem der vorhergehenden Ansprüche, **dadurch gekennzeichnet,**
**dass** ein System zur Energieversorgung des Transportfahrzeugs vorgesehen ist, das entweder über induktive, im Boden verlegte Leitungen, mittels eines induktiven Aufnahmeelements (14) oder über stationär anfahrbare Energieversorgungs-Stationen für die Zufuhr elektrischer, flüssiger oder gasförmiger Energie sorgt, wobei im Fahrzeuggehäuse (3) Stellraum (28) für entsprechende Energiespeicher vorgesehen ist

4. Vorrichtung nach einem der vorhergehenden Ansprüche, **dadurch gekennzeichnet,**
**dass** der Schwerpunkt eines Lastregals (12) mittels Sensoren erfasst, und dass das Ergebnis einer solchen Schwerpunkt - Ermittlung zur Korrektur der Schwerpunktlage mittels der Steuerung der Stellelemente (18) und (17) für die Hubstangen (19) und (16) verwendet wird.

5. Vorrichtung nach einem der vorhergehenden Ansprüche, **dadurch gekennzeichnet,**
**dass** die Lichtfeldsensoren (48, 5) in der Form von hunderten von Minilinsen nach dem Lichtfeldprinzip optische Informationen sammeln, die dann später zu Bildern mit einer gewünschten Auflösung und/oder einem gewünschten Blickwinkel datentechnisch zusammengestellt werden können.

## Claims

1. Device for picking orders largely by machine in warehouses by means of independently freely movable transport vehicles, having the following features:
a) a vehicle housing (3) having a carrier plate (1) for receiving and transporting a load rack (12) with transport material (13), having two drive wheels (6), which are separately driven on both sides in the middle of the vehicle housing (3) on a separately mounted axis of rotation (5) in each case, wherein at least one support wheel (9, 21) is provided in each case on the front side and on the rear side of the vehicle housing (9), and wherein the carrier plate (1) carries a load rack (12) with a light robot (15) having means for grasping products, and
b) at least one 3D scanner (10) as well as at least one WLAN antenna (11) in the front region of the vehicle housing (3),
**characterized by**
c) a wishbone (34) which connects drive wheels (6), which are pivotable about the axis of rotation (5) in each case via an angle lever (40) so that these drive wheels can execute vertical movements independently of one another, and
d) a centrally arranged positioning element (31), which, via a lift-turn lever (27) and a pushrod (24) connected thereto, can move two front lift rods (19) and two rear lift rods (16) to raise or lower the carrier plate (1), wherein
e) the light robot (15) has a light field sensor (48) in the region of the means for grasping products and the vehicle housing (3) has at least one light field sensor (5) in the front region.

2. Device according to Claim 1,
**characterized in that** the light robot (15) takes the gripper means determined to be suitable in each case from a gripper magazine (46) by means of a quick-release coupling (47) to be actuated automatically.

3. Device according to any one of the preceding claims,
**characterized in that** a system for power supply of the transport vehicle is provided, which ensures the supply of electric, liquid, or gaseous energy either via inductive lines laid in the floor, by means of an inductive pickup element (14), or via stationary approachable energy supply stations, wherein storage space (28) for corresponding energy stores is provided in the vehicle housing (3) .

4. Device according to any one of the preceding claims,
**characterized in that** the center of gravity of a load rack (12) is detected by means of sensors, and the result of such a center of gravity determination is used to correct the center of gravity location by means of the controller of the positioning elements (18) and (17) for the lift rods (19) and (16).

5. Device according to any one of the preceding claims,
**characterized in that** the light field sensors (48, 5) in the form of hundreds of mini-lenses collect items of optical information according to the light field principle, which can then be assembled later into images having a desired resolution and/or a desired viewing angle by data processing.

## Revendications

1. Dispositif pour l'assemblage largement automatisé de livraisons de marchandises dans des entrepôts au moyen de véhicules de transport librement mobiles automatiquement, présentant les caractéristiques suivantes:
a) un corps de véhicule (3) avec une plaque de support (1) destinée à recevoir et transporter une étagère robuste (12) avec une marchandise à transporter (13), avec deux roues motrices (6) entraînées séparément de part et d'autre au milieu du corps de véhicule (3) respectivement sur un axe de rotation (5) supporté séparément, dans lequel il est prévu sur le côté avant et sur le côté arrière du corps de véhicule (9) respectivement au moins une roue d'appui (9, 21), et dans lequel la plaque de support (1) porte une étagère robuste (12) avec un robot léger (15) muni de moyens pour saisir des marchandises, et
b) au moins un lecteur 3D (10) ainsi qu'au moins une antenne WLAN (11) dans la région avant du corps de véhicule (3),
**caractérisé par**
c) une bielle transversale (34), qui relie les roues motrices (6) pouvant pivoter autour de l'axe de rotation (5) respectivement au moyen d'un levier coudé (40), de telle manière que celles-ci puissent exécuter des mouvements verticaux indépendants l'un de l'autre, et
d) un élément de réglage (31) disposé au centre, qui peut déplacer, au moyen d'un levier rotatif de levage (27) et d'une tige de poussée (24) reliée à celui-ci, deux barres de levage avant (19) et deux barres de levage arrière (16) pour soulever ou abaisser la plaque de support (1), dans lequel
e) le robot léger (15) présente dans la région des moyens pour saisir des marchandises un capteur de champ lumineux (48) et le corps de véhicule (3) présente dans la région avant au moins un capteur de champ lumineux (5).

2. Dispositif selon la revendication 1, **caractérisé en ce que** le robot léger (15) prélève au moyen d'un couplage à raccord rapide (47) à actionner automatiquement le moyen de pince respectivement considéré comme adéquat dans un magasin de pinces (46).

3. Dispositif selon l'une quelconque des revendications précédentes, **caractérisé en ce qu'**il est prévu un système pour l'alimentation en énergie du véhicule de transport, qui assure la fourniture d'énergie électrique, liquide ou gazeuse soit par des conducteurs inductifs posés dans le sol, soit au moyen d'un élément de réception par induction (14) soit par des stations d'alimentation en énergie accessibles de façon stationnaire, dans lequel il est prévu dans le corps de véhicule (3) un espace de rangement (28) pour des accumulateurs d'énergie correspondants.

4. Dispositif selon l'une quelconque des revendications précédentes, **caractérisé en ce que** le centre de gravité d'une étagère robuste (12) est détecté au moyen de capteurs, et **en ce que** le résultat d'une telle détection de centre de gravité est utilisé pour la correction de la position du centre de gravité au moyen de la commande des éléments de réglage (18) et (17) pour les barres de levage (19) et (16).

5. Dispositif selon l'une quelconque des revendications précédentes, **caractérisé en ce que** les capteurs de champ lumineux (48, 5) sous la forme de centaines de mini-lentilles collectent selon le principe du champ lumineux des informations optiques, qui peuvent alors être assemblées ultérieurement en images par la technique des données avec une résolution désirée et/ou un angle d'observation désiré.
